Europäisches Patentamt

European Patent Office

Office européen des brevets

(11) Veröffentlichungsnummer: **0 152 525**
A2

(12) **EUROPÄISCHE PATENTANMELDUNG**

(21) Anmeldenummer: **84110963.0**

(22) Anmeldetag: **13.09.84**

(51) Int. Cl.⁴: **G 01 B 11/14**

(30) Priorität: **29.09.83 DE 3335355**

(43) Veröffentlichungstag der Anmeldung: **28.08.85**
**Patentblatt 85/35**

(84) Benannte Vertragsstaaten: **AT BE CH DE FR GB IT LI LU NL SE**

(71) Anmelder: **Siemens Aktiengesellschaft, Berlin und München Wittelsbacherplatz 2, D-8000 München 2 (DE)**

(72) Erfinder: **Bodlaj, Viktor, Dr., Werinherstrasse 69, D-8000 München 90 (DE)**

(54) Verfahren zum berührungslosen Messen des Abstandes eines bestimmten Punktes einer Oberfläche von einer Bezugsebene und Vorrichtung zur Durchführung eines solchen Verfahrens.

(57) Es wird ein Verfahren zum berührungslosen Messen des Abstandes eines bestimmten Punktes einer Oberfläche von einer Bezugsebene beschrieben, wobei die Oberfläche (OW) von zwei aus verschiedenen Richtungen einfallenden, auf eine in der Bezugsebene (B) festgelegte gemeinsame Abtaststrecke (A) gerichteten und längs dieser Abtaststrecke bewegten Lichtstrahlenbündel (R, L) abgetastet wird. Bei der Abtastung in jeweils einer Richtung werden für jedes Lichtstrahlenbündel (R, L) jeweils der zeitliche Abstand zwischen einem Meßzeitpunkt ($t'_{r1}$, $t'_{l1}$) und einem zugeordneten Bezugszeitpunkt ($t_b$, $t_c$) gemessen und jeweils mit einer Digitalisierungsfrequenz (v) digitalisiert. Außerdem werden für jedes Lichtstrahlenbündel (R, L) neben dem jeweiligen Meßzeitpunkt ($t'_{r1}$, $t'_{l1}$) ein zweiter Meßzeitpunkt ($t''_{r1}$, $t'_{l1}$) erfaßt und der zeitliche Abstand zwischen den beiden einander zugeordneten Meßzeitpunkten ($t'_{r1}$, $t'_{r1}$ bzw. $t'_{l1}$, $t''_{l1}$) wird jeweils mit der halben Digitalisierungsfrequenz (v/2) digitalisiert. Die Summe aus den auf diese Weise vier erhaltenen Digitalzahlen ergibt einen exakten Meßwert.

0152525

SIEMENS AKTIENGESELLSCHAFT        Unser Zeichen

Berlin und München               VPA
**BEZEICHNUNG GEÄNDERT**              **83 P 1 7 8 3 E**

Siehe Titelseite

Verfahren zum berührungslosen Messen des Abstandes eines bestimmten Punktes auf der Oberfläche von einer Bezugsebene und Vorrichtung zur Durchführung eines solchen Verfahrens

Die vorliegende Erfindung betrifft ein Verfahren zum berührungslosen Messen des Abstandes eines bestimmten Punktes einer Oberfläche von einer Bezugsebene nach dem Oberbegriff des Patentanspruchs 1 und eine Vorrichtung zur Durchführung eines solchen Verfahrens.

Ein Verfahren der genannten Art ist beispielsweise aus der DE-OS 28 42 669 (VPA 78 P 7162) bekannt. Bei diesem bekannten Verfahren wird die Oberfläche deshalb von zwei in verschiedenen Einfallsrichtungen auf die Bezugsebene einfallenden Lichtstrahlenbündeln abgetastet, weil es besonders bei stark unebenen Oberflächen, beispielsweise bei Flächenprofilen, vorkommen kann, daß die Messung aufgrund einer bestimmten Streulichtcharakteristik des von der Oberfläche zurückgeworfenen Lichts und aufgrund eines ungünstigen Einfallswinkels bezüglich der Oberfläche vorkommen kann, daß kein Meßsignal entsteht und daher die Messung unterbrochen wird. Durch die Verwendung der unter verschiedenen Einfallsrichtungen einfallenden Lichtstrahlenbündel können auch stark unebene Oberflächen ohne Störung lückenlos vermessen werden.

Generell benötigt ein Verfahren der genannten Art zum Messen des Abstandes eines bestimmten Punktes einer Oberfläche von einer Bezugsebene ein nur unter einer Einfallsrichtung einfallendes hin- und herbewegts Licht-

Ed 1 Sti/15.9.83

0152525

strahlenbündel. Prinzipiell benötigt man zur Ermittlung des Abstandes auch nur einen Meßzeitpunkt und einen Bezugszeitpunkt und damit auch nur eine Abtastung in einer Richtung.

Aus der DE-OS 30 366 886 (VPA 80 P 7179) ist es bereits bekannt, daß bei den Verfahren zum berührungslosen Messen des Abstandes eines bestimmten Punktes einer Oberfläche von einer Bezugsebene der allgemeinen Art auch noch ein Problem auftritt, das von einer anderne Art ist, als das in der erstgenannten DE-OS 28 42 669 angegebene Problem. Dieses andersartige Problem besteht darin, daß für die in dem räumlich festgelegten begrenzten Meßfenster gemessene zeitlich ansteigende und wieder abfallende integrale Intensität des von der Oberfläche zurückgeworfenen Lichts des jeweiligen Lichtstrahlenbündels, dessen Strahlen das Meßfenster überstreichen, eine symmetrische Glockenkurve angenommen wird. Dies ist aber nur dann der Fall, wenn das Streuvermögen der Oberfläche gleichmäßig ist. Ändert sich dieses Streuvermögen von Ort zu Ort, können Verzerrungen in der Glockenkurve der gemessenen Intensität auftreten. Auch die Granulation des gestreuten Laserlichts, die bei geschliffenen Oberflächen besonders ausgeprägt ist, kann zu solchen Verzerrungen der Glockenkurve führen. Diese Verzerrungen zeigen sich in der Regel darin, daß die verzerrte Glockenkurve im Vergleich zur symmetrischen Glockenkurve eine steilere und eine flachere Flanke aufweist. Dies führt zu Meßfehlern, wie sie in der DE-OS 30 36 886 geschildert sind. Dort ist auch angegeben, wie diese Meßfehler durch Differentiation der Glockenkurve elektronisch beseitigt werden können.

Aufgabe der vorliegenden Erfindung ist es, aufzuzeigen, wie bei einem Verfahren zum berührungslosen Messen des Abstandes eines bestimmten Punktes einer Oberfläche von einer Bezugsebene durch die Verzerrung der Glockenform der Intensitätskurve verursachte Fehler auf einfache

0152525

Weise unter Umgehung einer Differentiation der Intensitätskurve elektrisch beseitigt oder zumindest wesentlich reduziert werden können.

Diese Aufgabe wird gelöst durch ein Verfahren der eingangs genannten Art, welches die im kennzeichnenden Teil des Anspruchs 1 angegebenen Merkmale aufweist.

Zweckmäßige Ausgestaltungen des erfindungsgemäßen Verfahrens gehen aus den Unteransprüchen 2 bis 5 hervor.

Zweckmäßige Vorrichtungen zur Durchführung des erfindungsgemäßen Verfahrens, bei dem die Oberfläche gleichzeitig von zwei unter verschiedenen Einfallsrichtungen auf die Bezugsebene einfallenden hin- und herbewegten Lichtstrahlenbündeln abgetastet wird, gehen aus den Unteransprüchen 6 bis 8 hervor.

Die Erfindung wird beispielhaft anhand der Figuren in der folgenden Beschreibung näher erläutert. Von den Figuren zeigen:

Figur 1 den prinzipiellen Aufbau einer Vorrichtung zur Durchführung des von der Oberflächenbeschaffenheit weitgehend unabhängigen Verfahrens,

Figur 2 Impulsdiagramme I bis VI über der Zeit t, welche das Verfahren sowohl für symmetrische Meßsignale als auch für verzerrte Meßsignale veranschaulichen,

Figur 3 ein Blockschaltbild einer einfachen Auswerteeinrichtung für die Vorrichtung nach Figur 1,

Figur 4 und Figur 5 zwei Vorrichtungen gemäß Figur 1, die zeigen, wie die Lichtquelle, die Bezugsdetektoren, der Lichtablenker, der Strahlteiler, die Umlenkeinrichtung und der Detektor mit dem Meßfenster kompakt angeordnet werden können, und

Figur 6 ein Prisma, das als Strahlteiler und Umlenkspiegel dient.

83 P 1783 E

0152525

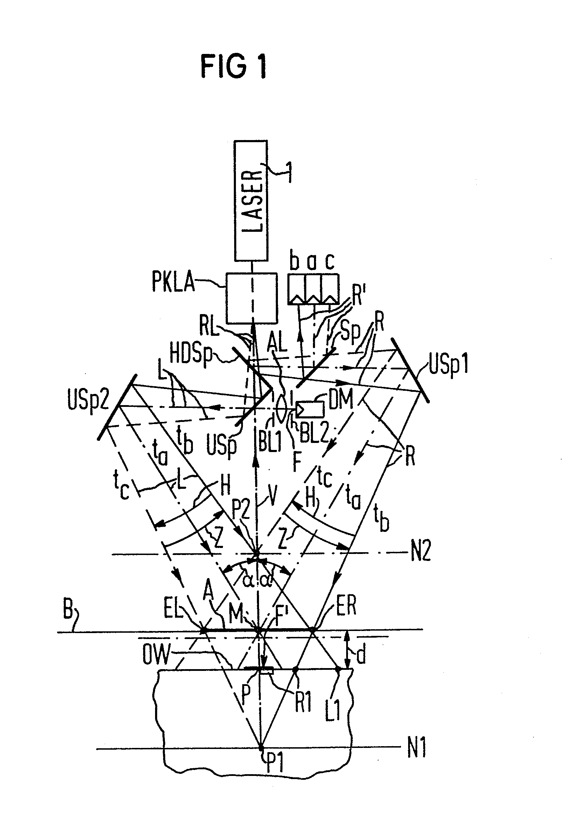

In der Vorrichtung nach Figur 1 sendet ein Laser 1 einen Laserstrahl RL vertikal nach unten aus, der von einem Lichtablenker PKLA aus der Vertikalen nach links und rechts ausgelenkt wird. Dieser hin- und hergelenkte Laserstrahl RL trifft auf einen zur Vertikalen geneigten halbdurchlässigen Spiegel HDSp, der eine Hälfte der Lichtenergie durchläßt und die andere Hälfte in Form eines Teilstrahlenbündels nach rechts reflektiert.

Im Strahlengang des durch den halbdurchlässigen Spiegel HDSp hindurchgegangenen Teilstrahlenbündels L ist im Winkel zur Vertikalen ein aus einer beiderseits verspiegelten Glasscheibe bestehender teildurchlässiger Umlenkspiegel USp angeordnet, der das Teilstrahlenbündel L nach links ablenkt.

In jedem der nach rechts und links reflektierten Teilstrahlenbündel R und L ist jeweils ein äußerer Umlenkspiegel USp1 bzw. USp2 angeordnet, der das betreffende Teilstrahlenbündel R bzw. L zur Bezugsebene B hin umlenkt. Diese Bezugsebene steht vertikal zur Zeichenebene, wobei angenommen ist, daß das Strahlenbündel RL und die Teilstrahlenbündel R, L in oder parallel zur Zeichenebene hin- und hergelenkt werden.

Zwischen dem halbdurchlässigen Spiegel HDSp und dem äußeren Umlenkspiegel USp1 ist im Strahlengang des betreffenden Teilstrahlenbündels R ein zusätzlicher teildurchlässiger Spiegel Sp angeordnet, der einen geringen Teil der Lichtenergie nach oben in Richtung dreier Detektoren b, a, c herauslenkt, die bei der Hin- und Herbewegung des rechten Teilstrahlenbündels R von dem herausgelenkten Teilstrahlenbündel R' nacheinander überstrichen werden. Jeder dieser Detektoren b, a, c gibt, wenn er

83 P 1783 E 0152525

von dem hin- und herbewegten herausreflektierten Teilstrahlenbündel R' getroffen wird, jeweils ein Meßsignal ab, das einen Bezugszeitpunkt $t_b$, $t_a$ bzw. $t_c$ bestimmt, in dem das Teilstrahlenbündel R° und damit auch der Laserstrahl RL und das Teilstrahlenbündel L jeweils eine bestimmte Richtung einnehmen. In der Figur 1 sind die Strahlenbündel gewissermaßen in drei überlagerten Momentaufnahmen in diesen drei entsprechenden Richtungen dargestellt.

Im Bezugszeitpunkt $t_b$ sind die beiden Teilstrahlenbündel R und L so ausgerichtet, daß sie einen Punkt ER der Bezugsebene B treffen. Diese so ausgerichteten Teilstrahlenbündel sind durchgezogen gezeichnet.

Im Zeitpunkt $t_a$ sind die beiden jetzt strichpunktiert dargestellten Teilstrahlenbündel R und L so ausgerichtet, daß sie einen Punkt M' der Bezugsebene treffen. In diesem Zeitpunkt $t_a$ sind der Laserstrahl RL vertikal und die beiden nach links und rechts sich ausbreitenden Teilstrahlenbündel R und L genau waagerecht ausgerichtet. Der Zeitpunkt $t_a$ dient im wesentlichen zur Kontrolle des Bewegungsablaufs der hin- und herbewegten Teilstrahlenbündel R und L.

Im Bezugszeitpunkt $t_c$ sind die beiden jetzt gestrichelt dargestellten Teilstrahlenbündel R und L so ausgerichtet, daß sie einen Punkt EL der Bezugsebene B treffen.

Die Punkte ER, M' und EL definieren in der Bezugsebene B eine Abtaststrecke A, die von den beiden Teilstrahlenbündeln R und L gemeinsam überstrichen wird, und die in den Punkten ER und EL endet, wobei der Punkt M' den Mittelpunkt dieser gemeinsamen Abtaststrecke A bildet. Dieser Mittelpunkt M' wird im Zeitpunkt $t_a$ von den beiden Teilstrahlenbündeln R und L aus verschiedenen Richtungen unter dem gleichen Einfallswinkel $\alpha$ getroffen.

0152525
83 P 1783 E

Aufgrund der beschriebenen Optik bewegen sich die beiden Teilstrahlenbündel R und L gleichzeitig und gleichzeitig in der gleichen Richtung hin und her und in jedem Moment sind sie auch gleichzeitig auf einen gemeinsamen Punkt der Abtaststrecke A ausgerichtet. Bei Betrachtung einer einzigen solchen Hin- und Herbewegung sei angenommen, daß sich die beiden Teilstrahlenbündel R und L zunächst in der Richtung H hin- und dann in der entgegengesetzten Richtung Z wieder herbewegen.

Bei der Hinbewegung in Richtung H erzeugt zuerst der Detektor b ein Meßsignal, das den Bezugszeitpunkt $t_b$ festlegt. Dann gibt der Detektor a sein Meßsignal ab, das den Zeitpunkt $t_a$ bestimmt. Danach erzeugt der Detektor c ein Meßsignal, das den anderen Bezugszeitpunkt $t_c$ festlegt. Danach kehrt sich die Bewegungsrichtung um und die beiden Teilstrahlenbündel R und L bewegen sich in der Richtung Z wieder her.

Bei dieser Herbewegung erzeugt zuerst der Detektor c ein Meßsignal, das einen Zeitpunkt $t'_c$ anzeigt. Nach dem der Detektor a sein Meßsignal abgegeben hat, erzeugt der getroffene Detektor b ein Meßsignal, das einen Bezugszeitpunkt $t'_b$ festlegt.

Die Bewegung der hin- und herbewegten Teilstrahlenbündel R und L erfolgt so, daß sie sowohl bei der Hin- als auch bei der Herbewegung in jedem Moment, in dem sie auf einen gemeinsamen Punkt der gemeinsamen Abtaststrecke A ausgerichtet sind, eine jeweils gleich große Momentangeschwindigkeit haben. d.h. daß jedem Punkt der Abtaststrecke A ein allen Teilstrahlenbündeln und Bewegungsrichtungen gemeinsamer Momentangeschwindigkeitsbetrag zugeordnet ist, den die hin- und herbewegten Teilstrahlenbündel R und L jeweils in dem Moment einnehmen, in dem sie jeweils auf diesen Punkt der Abtaststrecke A gerichtet sind.

0152525

Dadurch wird erreicht, daß jede beliebig vorgegebene Teilstrecke der Abtaststrecke von beiden Lichtstrahlenbündeln in beiden Bewegungsrichtungen jeweils in der gleichen Zeit durchlaufen wird.

Durch die Bezugszeitpunkte $t_b$ und $t_c$ sind auch zwei Null-ebenen N1 und N2 definiert, von denen die eine N1 unterhalb und die andere N2 oberhalb der Bezugsebene B angeordnet ist und die beide parallel zur Bezugsebene B verlaufen. Beide Nullebenen sind durch Punkte P1 und P2 definiert, in denen sich das Teilstrahlenbündel R und das Teilstrahlenbündel L schneiden würden, wenn der Bezugszeitpunkt $t_c$ für das eine Teilstrahlenbündel mit dem Bezugszeitpunkt $t_b$ für das andere Teilstrahlenbündel zusammenfallen würde.

Durch diese beiden Punkte P1 und P2 ist eine ortsfeste Achse V definiert, auf der das ein Meßfenster F bildende Detektorfenster eines Fotodetektors DM angeordnet ist. Die Achse V wird durch den beidseitig verspiegelten Umlenkspiegel USp nach rechts umgelenkt und das Detektorfenster F befindet sich zusammen mit einer zwischen zwei spaltförmigen Blenden BL1 und BL2 angeordneten Abbildungsoptik AL, die vor dem Fenster angeordnet sind, auf dem umgelenkten Teil der Verbindungsachse V.

Zum Messen des Abstandes eines bestimmten Punktes einer Oberfläche eines Meßobjekts muß dieses so zwischen die beiden Nullebenen N1 und N2 in zumindest geringfügigem Abstand von der Bezugsebene B gebracht werden, daß seine Oberfläche von der Achse V in einem Punkt P getroffen wird, dessen Abstand d von der Bezugsebene B gemessen wird. Dieser Punkt P liegt im Zentrum eines von der Abbildungsoptik AL auf der Oberfläche OW abgebildeten Meßfläche F', das von den beiden Teilstrahlenbündeln R und L während der Abtastung in beiden Richtungen durchlaufen wird. Wenn die Oberfläche in der Meßfläche F' ein gleichmäßiges Streuvermögen aufweist, entsteht durch die Faltung der Intensitätsverteilung des in dem von der Oberfläche zurückgeworfenen Licht betreffenden Teilstrahlenbündels mit der Spaltfunktion des Fotodetektors und der Abbildungsoptik am Fotodetektor DM ein Meßsignal mit zeitlich symmetrischem Verlauf in Form einer symmetrischen Glockenkurve.

Ist das Streuvermögen oder die Oberflächenbeschaffenheit in der Meßfläche F' nicht gleichmäßig, so kann die symmetrische Glockenform des Meßsignals verzerrt werden. Nimmt man beispielsweise an, daß der Bereich der Meßfläche F' rechts vom Punkt P hell ist, während der links von dem Punkt P liegende Bereich der Meßfläche dunkel ist, so entsteht bei der Abtastung in der Richtung H ein Meßsignal, das steiler ansteigt, als es abfällt und dessen Maximum in Richtung ansteigender Flanke verschoben ist. Bei der Abtastung in der Richtung Z sind die Verhältnisse genau umgekehrt, d.h. die ansteigende Flanke des Meßsignals ist flacher als die abfallende Flanke und das Maximum ist in Richtung abfallender Flanke verschoben. Da zum Durchlaufen einer beliebigen Teilstrecke der Abtaststrecke A das in der Richtung H bewegte Teilstrahlenbündel R die gleiche Zeit braucht wie das in der Gegenrichtung Z bewegte Teilstrahlenbündel L, sind die für beide Richtungen erhaltenen Glockenkurven spiegelsymmetrisch zueinander.

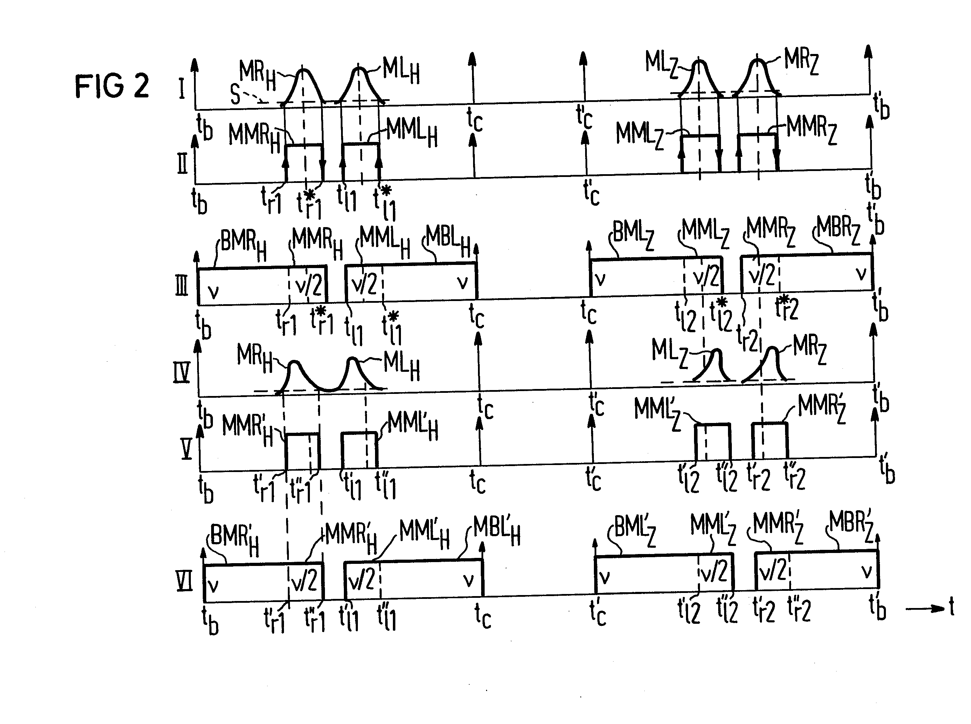

Zur Erläuterung der Wirkungsweise der Vorrichtung nach Figur 1 und des ihr zugrundeliegenden Prinzips, wird auf die Figur 2 Bezug genommen. Die Gewinnung eines Meßwertes, der ein Maß für den Abstand d des Punktes P der Oberfläche OW der Bezugsebene B ist, wird zunächst anhand der Diagramme I bis III für den Fall symmetrisch glockenförmiger Meßsignale erläutert.

0152525

Im Bezugszeitpunkt $t_b$ schneiden sich die beiden Teil-strahlenbündel R und L im rechten Endpunkt ER der Abtaststrecke A. Da die Oberfläche OW unter der Bezugsebene B angeordnet ist, trifft das rechte Teilstrahlenbündel diese Oberfläche OW in einem Punkt R1, der näher am Punkt P liegt als der Punkt L1, in dem das linke Teilstrahlenbündel L die Oberfläche OW trifft. Dies bedeutet, daß bei der Hinbewegung in Richtung H das rechte Teilstrahlenbündel R früher auf die Meßfläche F' trifft, als das linke Teilstrahlenbündel L.

Dementsprechend erscheint im Diagramm I der Figur 2 das bei der Hinbewegung in Richtung H von dem rechten Teilstrahlenbündel R verursachte symmetrisch glockenförmige Meßsignal $MR_H$ zeitlich früher, als das von dem linken Teilstrahlenbündel L verursachte Meßsignal $ML_H$.

Wenn sich nach dem Erreichen des linken Endpunktes EL der Abtaststrecke A zum Bezugszeitpunkt $t_c$ die Bewegungs-richtung wieder umkehrt und der linke Endpunkt EL durch die sich jetzt in der Herrichtung Z bewegenden Teilstrahlenbündel R und L im Bezugszeitpunkt $t'_c$ wieder erreicht worden ist, haben sich die Verhältnisse genau umgekehrt. Das bedeutet, daß bei der Herbewegung in der Richtung Z das von dem linken Teilstrahlenbündel L verursachte symmetrisch glockenförmige Meßsignal $ML_Z$ früher auftritt, als das Meßsignal $MR_Z$ des rechten Teilstrahlenbündels R.

Die symmetrisch glockenförmigen Meßsignale $MR_H$, $ML_H$, $ML_Z$ und $MR_Z$ werden mit Hilfe eines Schwellwertelementes mit einer vorgegebenen Schwelle S in Rechteckimpulse $MMR_H$, $MML_H$, $MML_Z$ bzw. $MMR_Z$ umgewandelt, die im Diagramm II der Figur 2 dargestellt sind. Die durch die Vorderflanken dieser Rechteckimpulse bestimmten Zeitpunkte $t_{r1}$, $t_{11}$, $t_{12}$ bzw. $t_{r2}$ stellen jeweils den einen zu erfassenden Meßzeitpunkt dar. Davon gelten die einen Meßzeitpunkte $t_{r1}$ und $t_{r2}$ für das rechte Teilstrahlenbündel R und die

0152525

einen Meßzeitpunkte $t_{11}$ und $t_{12}$ sind dem linken Teilstrahlenbündel L zugeordnet.

Die durch die Rückflanken dieser Rechteckimpulse des Diagramms II bestimmten Zeitpunkte $t^*_{r1}$, $t^*_{11}$, $t^*_{12}$ bzw. $t^*_{r2}$ stellen jeweils die anderen zu erfassenden Meßzeitpunkte dar. Davon sind die anderen Meßzeitpunkte $t^*_{r1}$ und $t^*_{r2}$ dem rechten Teilstrahlenbündel R und die anderen Meßzeitpunkte $t^*_{11}$ und $t^*_{12}$ dem linken Teilstrahlenbündel L zugeordnet.

Die einen Meßzeitpunkte zeigen jeweils an, wann die ansteigende Flanke der die gemessene integrale Intensität darstellenden Meßsignale des Diagramms I in Figur 2 den Intensitätspegel S erreicht, während die anderen Meßzeitpunkte jeweils anzeigen, wann die abfallende Flanke der Meßsignale wieder diesen Intensitätspegel S erreicht.

Die Erzielung eines Meßwertes sei beispielsweise für die Hinbewegung der beiden Teilstrahlenbündel R und L in der Richtung H erläutert:
Zunächst wird der zeitliche Abstand $t_{r1} - t_b$ zwischen dem bei der Hinbewegung des rechten Teilstrahlenbündels R erfaßten einen Meßzeitpunkt $t_{r1}$ und erfaßten Bezugszeitpunkt $t_b$ mit einer Digitalisierungsfrequenz $\nu$ digitalisiert und der erhaltene Zahlenwert gespeichert.
Dann wird der zeitliche Abstand $t^*_{r1} - t_{r1}$ zwischen dem bei der Hinbewegung des rechten Teilstrahlenbündels erfaßten anderen Meßzeitpunkt $t^*_{r1}$ und dem erfaßten einen Meßzeitpunkt $t_{r1}$ mit der halben Digitalisierungsfrequenz $\nu/2$ digitalisiert und der dabei erhaltene Zahlenwert gespeichert.

Dann wird der zeitliche Abstand $t_{11} - t^{*}_{11}$ zwischen dem bei der Hinbewegung des linken Teilstrahlenbündels L erfaßten einen Meßzeitpunkt $t_{11}$ und dem erfaßten anderen Meßzeitpunkt $t^{*}_{11}$ mit der halben Digitalisierungsfrequenz $\gamma/2$ digitalisiert und der dabei erhaltene Zahlenwert gespeichert. Schließlich wird der zeitliche Abstand $t_c - t^{*}_{11}$ zwischen dem bei der Hinbewegung des linken Teilstrahlenbündels L erfaßten anderen Meßzeitpunkt $t^{*}_{11}$ und dem dabei erfaßten Bezugszeitpunkt $t_c$ mit der Digitalisierungsfrequenz $\gamma$ digitalisiert und der dabei erhaltene Zahlenwert ebenfalls gespeichert. Die vier erhaltenen Zahlenwerte werden zu einem exakten Meßwert M addiert, dessen halber Wert genau dem zeitlichen Abstand zwischen dem Zeitpunkt des Maximums eines Meßsignals $MR_H$, $ML_H$, $ML_Z$, $MR_Z$ und dem ihm zugeordneten Bezugszeitpunkt $t_b$, $t_c$, $t'_c$ bzw. $t'_b$ entspricht, der genau dem Abstand d des auf der Achse V liegenden Punktes P der Oberfläche OW von der Bezugsebene B entspricht.

Auf ähnliche Weise wird bei der Herbewegung ein Meßwert erhalten. Dazu wird bei der Herbewegung des linken Teilstrahlenbündels L der zeitliche Abstand zwischen dem einen Meßzeitpunkt $t_{12}$ und dem zugeordneten Bezugszeitpunkt $t'_c$ mit der Digitalisierungsfrequenz $V$ und der zeitliche Abstand zwischen dem anderen Meßzeitpunkt $t^{*}_{12}$ und dem einen Meßzeitpunkt $t_{12}$ mit der halben Digitalisierungsfreuqenz $V/2$ digitalisiert. Ähnlich wird bei der Herbewegung des rechten Teilstrahlenbündels R der zeitliche Abstand zwischen dem anderen Meßzeitpunkt $t^{*}_{r2}$ und dem einen Meßzeitpunkt $t_{r2}$ mit der halben Digitalisierungsfreuqenz und der zeitliche Abstand zwischen dem zugeordneten Bezugszeitpunkt $t'_b$ und dem anderen Meßzeitpunkt $t^{*}_{r2}$ mit der Digitalisierungsfrequenz $V$ digitalisiert. Die Summe der vier entsprechenden Zahlenwerte entspricht wieder genau einem exakten Meßwert M.

Die Diagramme IV bis VI in Figur 2 entsprechen der Reihe nach den Diagrammen I bis III in Figur 2, mit dem Unterschied, daß die Meßsignale verzerrt sind, wobei beispielsweise angenommen ist, daß sie in der bereits beschriebenen Weise verzerrt sind, bei welcher bei der Hinbewegung in Richtung H die ansteigende Flanke steiler ist als die abfallende Flanke, während bei der Herbewegung in Richtung Z die ansteigende Flanke flacher ist und die abfallende Flanke steiler.

In den Diagrammen I bis III und den Diagrammen IV bis VI sind einander entsprechende Signale und Impulse mit den gleichen Bezugszeichen versehen, mit dem einen Unterschied, daß bei den Diagrammen IV bis VI jeweils ein Apostroph hinzugefügt ist.

Aufgrund der Verzerrung der Meßsignale $MR'_H$, $ML'_H$, $ML'_Z$ und $MR'_Z$ stimmen die einen Meßzeitpunkte $t'_{r1}$, $t'_{11}$, $t'_{12}$, $t'_{r2}$ und die anderen Meßzeitpunkte $t''_{r1}$, $t''_{12}$, $t''_{12}$, $t''_{r2}$ nicht mit den entsprechenden einen und anderen Meßzeitpunkten der Diagramme II und III überein. Digitalisiert man aber bei der Hinbewegung der beiden Teilstrahlenbündel R, L oder bei deren Herbewegung in der gleichen Weise, wie oben beschrieben, so erhält man einen von den Verschiebungen der Meßzeitpunkte und damit auch von den Verzerrungen der Meßsignale unabhängigen Meßwert, der dem obengenannten exakten Meßwert M entspricht.

Im einzelnen bedeutet dies, daß bei der Hinbewegung der beiden Teilstrahlenbündel R und L der zeitliche Abstand zwischen dem bei der Bewegung des rechten Teilstrahlenbündels R erfaßten einen Meßzeitpunkt $t'_{r1}$ und dem dabei erfaßten Bezugszeitpunkt $t_b$ mit der Digitalisierungsfrequenz $\mu$ und der zeitliche Abstand zwischen dem dabei erfaßten anderen Meßzeitpunkt $t''_{r1}$ und dem erfaßten

einen Meßzeitpunkt $t_{r1}$ mit der halben Digitalisierungsfrequenz $V/2$ zu digitalisieren ist. Für das hinbewegte Teilstrahlenbündel L ist der zeitliche Abstand zwischen dem anderen Meßzeitpunkt $t''_{11}$ und dem einen Meßzeitpunkt $t'_{11}$ mit der halben und der zeitliche Abstand zwischen dem zugeordneten Bezugszeitpunkt $t_c$ und dem anderen Meßzeitpunkt $t''_{11}$ mit der ganzen Digitalisierungsfrequenz $V$ zu digitalisieren. Die Summe der vier dabei erhaltenen Zahlen ergeben einen exakten Meßwert M, dessen halber Wert genau dem zeitlichen Abstand zwischen dem Zeitpunkt des Maximums eines symmetrisch glockenförmigen Meßsignals $MR_H$, $ML_H$, $ML_Z$, $MR_Z$ im Diagramm I und dem zugeordneten Bezugszeitpunkt $t_b$, $t_c$, $t'_c$ bzw. $t'_b$, un damit genau dem Abstand des bestimmten Punktes P der Oberfläche OW von der Bezugsebene B entspricht.

Das gleiche gilt, wenn man bei der Herbewegung der beiden Teilstrahlenbündel R, L in der Richtung Z entsprechend digitalisiert.

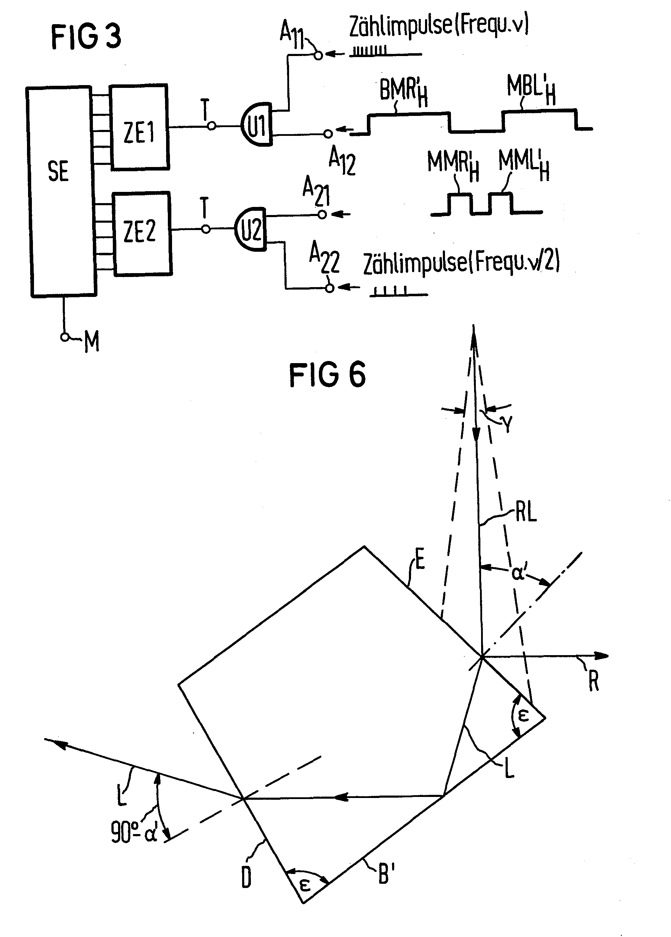

Eine einfache Schaltungsanordnung zur Durchführung einer beschriebenen Digitalisierung ist in der Figur 3 schematisch dargestellt. Die Vorrichtung weist zwei UND-Tore U1 und U2 mit jeweils zwei Eingängen $A_{11}$, $A_{12}$ bzw. $A_{21}$, $A_{22}$ auf. Der Ausgang eines jeden Tores U1, U2 ist mit dem Takteingang T je einer zugeordneten Zähleinrichtung ZE1 bzw. ZE2 verbunden, die beide gleich aufgebaut sein können und beispielsweise Binärzähler oder Dezimalzähler sind.

An einen Eingang $A_{11}$ des Tores U1 sind Zählimpulse der Digitalisierungsfrequenz $V$ angelegt. An einem Eingang $A_{22}$ des anderen Tores U2 sind Zählimpulsen der halben Digitalisierungsfrequenz $V/2$ angelegt.

An den Eingang $A_{12}$ des einen Tores $U_1$ sind nacheinander Impulse anzulegen, deren Dauer jeweils den zeitlichen Abstand zwischen jeweils einem Meßzeitpunkt und dem zugeordneten Bezugszeitpunkt entspricht, während an den Eingang $A_{21}$ des anderen Tores U2 Impulse anzulegen sind, deren Dauer dem zeitlichen Abstand zwischen jeweils einem Meßzeitpunkt und dem zugeordneten anderen Meßzeitpunkt entspricht, wobei jeder Impuls das betreffende Tor für die Dauer des angelegten Impulses öffnet, so daß es in dieser Zeit für die angelegten Zählimpulse durchlässig wird und so diese Zählimpulse an die betreffende Zähleinrichtung ZE1 bzw. ZE2 gelangen können, in der sie gezählt werden.

Es sei beispielsweise angenommen, daß die Digitalisierung bei der Hinbewegung der beiden Teilstrahlenbündel R und L erfolgt, wobei der Fall des Diagramms VI in Figur 2 angenommen ist. An den Eingang $A_{12}$ des Tores U1 gelangt zunächst der Impuls $BMR'_H$, dessen Länge dem zeitlichen Abstand zwischen dem einen Meßzeitpunkt $t'_{11}$ und dem davor erfaßten zugeordneten Bezugszeitpunkt $t_b$ entspricht. Während der Dauer dieses Impulses $BMR'_H$ gelangen Zählimpulse der Digitalisierungsfrequenz an die Zähleinrichtung ZE1 und werden von dieser gezählt.

Dann liegt an dem Eingang $A_{21}$ des anderen Tores U2 der Rechteckimpuls $MMR'_H$ an, der dem zeitlichen Abstand zwischen dem bei der Hinbewegung erfaßten beiden Meßzeitpunkten $t'_{r1}$ und $t''_{r1}$ entspricht. Während der Dauer dieses Impulses $MMR'_H$ läßt das andere Tor U2 Zählimpulse der halben Digitalisierungsfrequenz $\gamma/2$ zur zweiten Zähleinrichtung ZE2 durch, in der diese Zählimpulse gezählt werden.

Als nächstes erscheint am Eingang $A_{21}$ des Tores U2 der Rechteckimpuls $MML'_H$, dessen Dauer dem zeitlichen Abstand zwischen den beiden Meßzeitpunkten $t'_{11}$ und $t''_{11}$ entspricht. Während dessen Dauer werden wieder Zählimpulse der halben Digitalisierungsfreuqenz $\gamma/2$ von

der Zähleinrichtung ZE2 gezählt, in der nach Beendigung des Impulses $MML'_H$ die Summe sämtlicher gezählten Zählimpulse steht.

Dann erscheint am Eingang $A_{12}$ des einen Tores U1 der Rechteckimpuls $MBL'_H$, dessen Dauer dem zeitlichen Abstand zwischen dem anderen Meßzeitpunkt $t''_{l1}$ und dem zugeordneten Bezugszeitpunkt $t_c$ entspricht. Während der Dauer dieses Impulses werden von der einen Zähleinrichtung ZE1 wieder Zählimpulse der Digitalisierungsfrequenz $\nu$ zählt und am Ende des Impulses $MBL'_H$ steht in der einen Zähleinrichtung ZE1 die Summe der gezählten Zählimpulse der Digitalisierungsfrequenz .

Die beiden Inhalte der Zähleinrichtung ZE1 und ZE2 werden in einer Summiereinrichtung SE addiert und der Wert der Summe entspricht dem exakten Meßwert M.

Analog werden bei der Herbewegung der beiden Teilstrahlenbündel R, L an den Eingang $A_{12}$ des einen Tores U1 nacheinander die Rechteckimpulse $BML'_Z$ und $MBR'_Z$ angelegt, während an den Eingang $A_{21}$ des anderen UND-Tores U2 nacheinander die Rechteckimpulse $MML'_Z$ und $MMR'_Z$ angelegt werden.

Analoges gilt für die entsprechenden Impulse des Diagramms III bei der Hin- und Herbewegung.

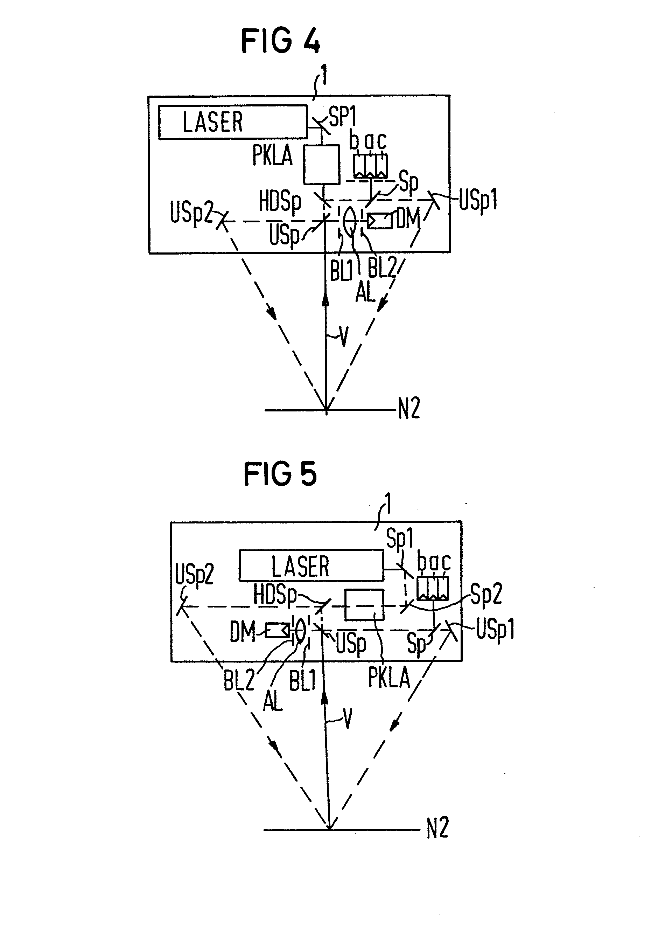

In den Figuren 4 und 5 sind zwei kompakte Anordnungen der Vorrichtung nach Figur 1 dargestellt. Die Anordnung nach Figur 3 unterscheidet sich von der Anordnung nach Figur 1 nur dadurch, daß zwischen dem Laser 1 und dem Strahlablenker PKLA noch ein Umlenkspiegel Sp1 angeordnet ist, der den vom Laser ausgesandten Laserstrahl um 90° zum Strahlteiler hin umlenkt. Dadurch wird eine kompaktere Anordnung erreicht, weil der Laser 1 waagerecht angeordnet werden kann.

Bei der Anordnung nach Figur 4 ist der Laser 1 ebenfalls waagerecht angeordnet. Der von ihm ausgesandte Laserstrahl wird durch zwei zwischen dem Laser 1 und dem Strahlablenker PKLA angeordnete Umlenkspiegel Sp1 und Sp2 um 180° umgelenkt, so daß der Lichtablenker PKLA ebenfalls waagerecht angeordnet ist. Der halbdurchlässige Spiegel HDSp ist so angeordnet, daß das durch ihn hindurchgegangene Teilstrahlenbündel direkt auf den Umlenkspiegle USp2 trifft, während das reflektierte Teilstrahlenbündel nach unten auf den Umlenkspiegel USp gelenkt wird, der es nach rechts in Richtung des äußeren Umlenkspiegels USp1 umlenkt. Entsprechend wird die Achse V von dem Umlenkspiegel USp nach links umgelenkt und daher sind die Blenden BL1, BL2, die Abbildungsoptik AL und der Meßdetektor DM links vom Umlenkspiegel USp angeordnet.

In einer zweckmäßigen Ausführungsform einer Vorrichtung nach Figur 1 oder 3 ist für den halbdurchlässigen Spiegel HDSp und den Umlenkspiegel USp ein Prisma mit einer Basisfläche B und zwei Seitenflächen ED vorgesehen, bei dem die Seitenflächen E und D mit der Basisfläche B' jeweils den Winkel

$$\eta = 90° - (45° - \text{arc sind } \alpha'/n))/2 )$$

einschließt. Die Seitenflächen E ist im Strahlengang des im Winkel $\gamma$ hin- und herbewegten Laserstrahls RL so angeordnet, daß der Laserstrahl unter dem Einfallswinkel $\alpha'$ auf die Seitenfläche E einfällt. Diese Seitenfläche ist zugleich mit einem halbdurchlässigen Belag versehen, der den Strahlteiler HDSp bildet. Zweckmäßigerweise wird der Einfallswinkel $\alpha' = 45°$ gewählt. Das reflektierte Teilstrahlenbündel R wird dadurch im rechten Winkel zum Laserstrahl RL ausgestrahlt.

Das in das Prisma eindringende Teilstrahlenbündel L wird an der Basisfläche B' des Prismas totalreflektiert, und tritt an der Seitenfläche D gebrochen unter dem Ausfalls-

0152525

winkel 90° - $\alpha$ ' nach links aus. Dieses Teilstrahlenbündel L breitet sich daher leicht schräg nach oben aus. Zweckmäßigerweise ist die Seitenfläche D mit einem reflexmindernden Belag versehen.

Die Art der Strahlteilung durch das Prisma erleichtert die Einstellung der gleichen optischen Wege vom Strahlablenker PKLA bis zu einer Nullebene N1 oder N2 oder zur Bezugsebene B für beide Strahlenbündel R und L.

Zum Umlenken der Achse V kann ein vom Umlenkspiegel USp verschiedener Umlenkspiegel vorgesehen sein.

8 Patentansprüche
6 Figuren

Patentansprüche

1. Verfahren zum berührungslosen Messen des Abstandes eines bestimmten Punktes einer Oberfläche von einer Bezugsebene,
wobei die Oberfläche von zwei aus verschiedenen Richtungen einfallenden, auf eine in der Bezugsebene festgelegte gemeinsame Abtaststrecke gerichteten und längs dieser Abtaststrecke bewegten Lichtstrahlenbündeln mindestens einmal in zumindest einer Richtung abgetastet wird, derart, daß im Bereich der Abtaststrecke die beiden Lichtstrahlenbündel in der einen Richtung eine jeweils zu durchlaufende Strecke in der gleichen Zeit durchlaufen,
wobei bei der Bewegung eines jeden Lichtstrahlenbündels in der einen Richtung jeweils ein Bezugszeitpunkt und jeweils ein Meßzeitpunkt erfaßt werden, wobei der Bezugszeitpunkt jeweils anzeigt, wann das betreffende Lichtstrahlenbündel momentan auf einen zugeordneten Endpunkt der Abtaststrecke gerichtet ist, und der Meßzeitpunkt jeweils anzeigt, wann eine der beiden Flanken der zeitlich ansteigenden und abfallenden, in einem räumlich festgelegten Meßfenster gemessenen integralen Intensität des von der Oberfläche zurückgeworfenen Lichts des betreffenden Lichtstrahlenbündels, dessen Strahlen das Meßfenster überstreichen, einen vorbestimmten Intensitätspegel erreicht, wobei die bei der Bewegung eines jeden Lichtstrahlenbündels jeweils gemessene zeitliche Abstand zwischen dem erfaßten Meßzeitpunkt und erfaßten Bezugszeitpunkt Maß für den Abstand des bestimmten Punktes der Oberfläche von der Bezugsebene ist, d a d u r c h g e k e n n z e i c h n e t , daß der bei der Bewegung eines (R) der beiden Lichtstrahlenbündel (R, L) in der einen Richtung (H) erfaßte Bezugszeitpunkt ($t_b$) dann erfaßt wird, wenn das betreffende Lichtstrahlenbündel

0152525

(R) momentan auf den einen Endpunkt (ER) der Abtaststrecke (A) gerichtet ist, während der bei der Bewegung
des anderen Lichtstrahlenbündels (L) in der einen
Richtung (H) erfaßte Bezugszeitpunkt ($t_c$) dann erfaßt wird, wenn das betreffende Lichtstrahlenbündel (L)
momentan auf den anderen Endpunkt (EL) der Abtaststrecke
(A) ausgerichtet ist, daß bei jeder dieser Bewegungen
eines Lichtstrahlenbündels (R, L) jeweils zwei Meßzeitpunkte ($t'_{r1}$, $t''_{r1}$; $t'_{l1}$, $t''_{l1}$) erfaßt werden, von
denen der eine erfaßt wird, wenn die ansteigende Flanke,
und der andere erfaßt wird, wenn die abfallende Flanke
der integralen Intensität ($MR'_H$, $ML'_H$) den vorbestimmten Intensitätspegel (S) erreicht, daß bei der Bewegung
eines (R) der beiden Lichtstrahlenbündel (R, L) der
zeitliche Abstand ($t'_{r1}-t_b$) zwischen dem erfaßten
Bezugszeitpunkt ($t_b$) und dem einen erfaßten Meßzeitpunkt
($t'_{r1}$) mit einer vorgebbaren Digitalisierungsfrequenz
($v$) und der zeitliche Abstand ($t''_{r1}-t'_{r1}$) zwischen den
beiden erfaßten Meßzeitpunkten ($t'_{r1}$, $t''_{r1}$) mit der
halben Digitalisierungsfrequenz ($v/2$) digitalisiert
werden, während bei der Bewegung des anderen Lichtstrahlenbündels (L) der zeitliche Abstand ($t_c-t''_{l1}$)
zwischen dem anderen erfaßten Meßzeitpunkt ($t''_{l1}$) und
dem erfaßten Bezugszeitpunkt ($t_c$) mit der Digitalisierungsfrequenz ($v$) und der zeitliche Abstand
($t''_{l1}-t'_{l1}$) zwischen den beiden erfaßten Meßzeitpunkten
($t'_{l1}$, $t''_{l1}$) mit der halben Digitalisierungsfrequenz
($v/2$) digitalisiert werden, und daß der Abstand (d) des
bestimmten Punktes (P) von der Oberfläche (OW) aus der
Summe der auf diese Weise ermittelten vier Digitalzahlen
bestimmt wird.

2. Verfahren nach Anspruch 1, d a d u r c h   g e -
k e n n z e i c h n e t ,   daß die momentan auf den
Mittelpunkt (M) der Abtaststrecke (A) gerichteten, aus verschiedenen Richtungen einfallenden Lichtstrahlenbündel (R, L) unter dem gleichen Einfallswinkel ($\alpha$) einfallen.

3. Verfahren nach Anspruch 1 oder 2, d a d u r c h g e k e n n z e i c h n e t , daß die beiden Lichtstrahlenbündel (R, L) gleichzeitig bewegt werden.

4. Verfahren nach Anspruch 3, d a d u r c h g e - k e n n z e i c h n e t , daß die beiden gleichzeitig bewegten Lichtstrahlenbündel (R, L) so bewegt werden, daß sie jeweils gleichzeitig auf einen Punkt der Abtaststrecke (A) momentan ausgerichtet sind.

5. Verfahren nach einem der vorhergehenden Ansprüche, d a d u r c h g e k e n n z e i c h n e t , daß die beiden Lichtstrahlenbündel hin- und herbewegt werden, und sowohl die Hinbewegung als auch die Herbewegung für die Ermittlung des Abstandes (d) eines bestimmten Punktes (d) der Oberfläche (OW) von der Bezugsebene (B) ausgenutzt wird.

6. Vorrichtung zum berührungslosen Messen des Abstandes eines bestimmten Punktes auf der Oberfläche von einer Bezugsebene, mit einer Lichtquelle zur Erzeugung eines Lichtstrahlenbündels, mit einem Strahlablenker zum periodischen Ablenken des Lichtstrahlenbündels in einer Ebene, mit zwei ortsfesten lichtempfindlichen Detektoren zum Erfassen zweier Bezugszeitpunkte, in denen das Lichtstrahlenbündel zwei bestimmte Positionen einnimmt, zwischen denen es sich bewegt, mit einer optischen Umlenkeinrichtung zum Umlenken der Lichtstrahlen in Richtung eines die Ebene senkrecht schneidenden Bezugsebene derart, daß sie aus verschiedenen Richtungen einfallen, mit einem Detektorfenster eines lichtempfind-

lichen Detektors zum Erfassen eines Meßzeitpunktes, das im Bereich des von der Oberfläche zurückgeworfenen Lichts des bewegten Lichtstrahlenbündels ortsfest angeordnet ist, und mit einer Auswerteeinrichtung zum Auswerten von zwischen erfaßten Meßzeitpunkten und erfaßten Bezugszeitpunkten gemessenen Zeitdauern zur Durchführung eines Verfahrens nach einem der vorhergehenden Ansprüche, d a d u r c h g e k e n n z e i c h n e t , daß im Strahlengang des bewegten Lichtstrahlenbündels (RL) ein Strahlteiler (HDSp) angeordnet ist, der das Lichtstrahlenbündel (RL) in zwei in der Ebene bewegte Teilstrahlenbündel (RL) aufteilt, und daß die Umlenkeinrichtung (USp, USp1, USp2) so ausgebildet ist, daß sie die beiden Teilstrahlenbündel (R, L) aus verschiedenen Richtungen derart auf die Bezugsebene (B) lenkt, daß die beiden umgelenkten, in der Ebene bewegten Teilstrahlenbündel (R, L) in der Bezugsebene (B) in den Bezugszeitpunkten auf die gleichen Punkte (ER, EL) der Bezugsebene (B) ausgerichtet sind, welche die Endpunkte der Abtaststrecke (A) bilden, und daß die Auswerteeinrichtung eine Abtasteinrichtung (AS), die beim Erreichen des bestimmten Intensitätspegels (S) sowohl durch die ansteigende als auch durch die abfallende Flanke der integralen Intensität ($MR'_H$, $ML'_H$) je ein Zeitsignal abgibt, das jeweils den einen und anderen Meßzeitpunkt ($t'_{r1}$, $t''_{r1}$; $t'_{11}$, $t''_{11}$) markiert, eine Zähleinrichtung (ZE1) zum Zählen von Zählimpulsen der Digitalisierungsfrequenz ($\nu$) während der Zeitdauer zwischen jeweils einem Bezugszeitpunkt und einem zugeordneten Meßzeitpunkt, eine Zähleinrichtung (ZE2) zum Zählen von Zählimpulsen der halben Digitalisierungsfrequenz ($\nu/2$) zwischen jeweils einem und einem zugeordneten anderen Meßzeitpunkt und eine Summiereinrichtung (SE) aufweist, welche die bei der Bewegung des einen (R) und bei der Bewegung des anderen Teilstrahlenbündels (L) gezählten Zählwertepaare addiert.

- 22 - VPA 0152525

7. Vorrichtung nach Anspruch 6, d a d u r c h g e - k e n n z e i c h n e t , daß die Umlenkeinrichtung (USp, USp1, USp2) einen im Strahlengang eines (L) der beiden vom Strahlteiler (HDSp) erzeugten Teilstrahlenbündels (RL) angeordneten Umlenkspiegel (USp) zum Umlenken dieses Teilstrahlenbündels (L) in eine zur Ausbreitungsrichtung des anderen Teilstrahlenbündels (R) entgegengesetzte Richtung und zwei äußere Umlenkspiegel (USp1, USp2) zum Umlenken der beiden in entgegengesetzten Richtungen sich ausbreitenden Teilstrahlenbündeln (R, L) in Richtung zur Bezugsebene (B) aufweist.

8. Vorrichtung nach Anspruch 7, d a d u r c h g e - k e n n z e i c h n e t , daß für den Strahlteiler (HDSp) und den Umlenkspiegel (USp) ein Prisma mit einer Basisfläche (B') und zwei Seitenflächen (E, D) vorgesehen ist, bei dem die Seitenflächen (E, D) mit der Basisfläche (B') jeweils den Winkel

$$\eta = 90° - (45° - \text{arc} (\sin \alpha'/n))/2$$

einschließen, wobei eine Seitenfläche im Strahlengang des Lichtstrahlenbündels (RL) so anzuordnen ist, daß dieses Lichtstrahelnbündel (RL) unter dem Einfallswinkel ($\alpha'$) einfällt, wobei diese Seitenfläche mit einem teildurchlässigen Belag versehen ist und den Strahlteiler (HDSp) bildet, und wobei die Basisfläche (B') zusammen mit der anderen Seitenfläche (D) den Umlenkspiegel (USp) bildet.

FIG 1

FIG 2

I

II

III

IV

V

VI

$MR_H$  $ML_H$  $ML_Z$  $MR_Z$

S

$MMR_H$  $MML_H$  $MML_Z$  $MMR_Z$

$t_b$  $t_c$  $t'_c$  $t'_b$

$t_b$  $t_{r1}$  $t^*_{r1}$  $t_{l1}$  $t^*_{l1}$  $t'_c$  $t'_b$

$BMR_H$  $MMR_H$  $MML_H$  $MBL_H$  $BML_Z$  $MML_Z$  $MMR_Z$  $MBR_Z$

v  v/2  v/2  v  v  v/2  v/2  v

$t_b$  $t_{r1}$  $t^*_{r1}$  $t_{l1}$  $t^*_{l1}$  $t_c$  $t'_c$  $t_{l2}$  $t^*_{l2}$  $t_{r2}$  $t^*_{r2}$  $t'_b$

$MR_H$  $ML_H$  $ML_Z$  $MR_Z$

$t_b$  $MMR'_H$  $MML'_H$  $t_c$  $t'_c$  $MML'_Z$  $MMR'_Z$  $t'_b$

$t_b$  $t'_{r1}$  $t''_{r1}$  $t'_{l1}$  $t''_{l1}$  $t_c$  $t'_c$  $t'_{l2}$  $t''_{l2}$  $t'_{r2}$  $t''_{r2}$  $t'_b$

$BMR'_H$  $MMR'_H$  $MML'_H$  $MBL'_H$  $BML'_Z$  $MML'_Z$  $MMR'_Z$  $MBR'_Z$

v  v/2  v/2  v  v  v/2  v/2  v

$t_b$  $t'_{r1}$  $t''_{r1}$  $t'_{l1}$  $t''_{l1}$  $t_c$  $t'_c$  $t'_{l2}$  $t''_{l2}$  $t'_{r2}$  $t''_{r2}$  $t'_b$  → t

0152525

FIG 3

3/4

0152525

FIG 6

0152525

4/4

## FIG 4

## FIG 5